# FASCICULE DE BREVET EUROPEEN

(11) **EP 2 703 691 B1**
(45) Date de publication et mention de la délivrance du brevet: **01.04.2015**
(21) Numéro de dépôt: 13180337.1
(22) Date de dépôt: 14.08.2013
(51) Int. Cl.: F16H 21/40, G02B 7/00, G02B 7/182

(54) **Dispositif de positionnement angulaire à trois points morts**
Vorrichtung zur Winkeleinstellung mit drei Totpunkten
Apparatus for angular positioning with three dead centers

(30) Priorité: 31.08.2012 FR 1202338
(43) Date de publication de la demande: 05.03.2014
(73) Titulaire: Thales, 92200 Neuilly Sur Seine (FR)
(72) Inventeur: Vezain, Stéphane, 06210 Mandelieu (FR); Baudasse, Yannick, 06130 Grasse (FR); Guionie, Sébastien, 83600 Fréjus (FR)
(74) Mandataire: Collet, Alain

(56) Documents cités:
- WO-A1-92/08913
- FR-A1- 2 779 790
- US-A- 3 584 519
- US-A- 4 246 628

## Description

L'invention se situe dans le domaine de la transmission de mouvements mécaniques. Elle concerne un dispositif mécanique de positionnement angulaire et s'applique notamment aux instruments optiques nécessitant de positionner un élément tel qu'un miroir selon trois positions prédéfinies.

De nombreux dispositifs mécaniques existent pour réaliser un positionnement angulaire. Par exemple, un simple moteur pas à pas peut permettre un positionnement angulaire selon l'un de ses pas. Cependant, les dispositifs conventionnels peuvent s'avérer inadaptés pour certaines applications. Tel est par exemple le cas lorsque des précisions angulaires de l'ordre du centième de degré sont nécessaires. En outre, on rencontre des difficultés supplémentaires lorsque l'on souhaite obtenir une bonne stabilité et une bonne fiabilité des différentes positions angulaires. En d'autres termes, il est difficile d'obtenir des positions précises qui puissent être maintenues pendant des durées données, et qui puissent être retrouvées après avoir été quittées. Des exigences sévères en termes de précision, de stabilité et de fiabilité se rencontrent notamment dans le domaine de l'instrumentation optique. À titre d'exemple, un instrument optique peut nécessiter un étalonnage de l'un de ses capteurs. Cet étalonnage peut consister à orienter un miroir autour d'un axe selon trois positions distinctes. Une première position, appelée position scène, correspond à la position dans laquelle le miroir réfléchit un rayonnement depuis une zone à étudier. On dit que le miroir pointe vers la zone à étudier. Deux autres positions, appelées positions d'étalonnage, correspondent à des positions dans lesquelles le miroir réfléchit le rayonnement de sources de référence. Ces émetteurs de référence sont par exemple des corps noirs ou une visée vers l'espace froid. L'étalonnage du capteur nécessite dans ce cas un positionnement du miroir dans la première position d'étalonnage, puis dans la deuxième position d'étalonnage, et enfin dans la position scène.

L'un des éléments influençant le comportement du dispositif mécanique de positionnement est bien entendu l'actionneur. En règle générale, il s'agit d'un moteur électrique. Différents types de moteurs électriques peuvent être utilisés. Les moteurs à bobine mobile, dits "voice coil", présentent une grande précision. Cependant, ils nécessitent une commande à l'aide d'un asservissement en boucle fermée et le maintien dans une position donnée impose une alimentation électrique permanente. Les actionneurs piézoélectriques présentent également une grande précision. Cependant, ils doivent aussi être commandés par un asservissement en boucle fermée. En outre, ils présentent un produit effort - course relativement faible. En pratique, il est donc nécessaire d'utiliser des actionneurs piézoélectriques aux dimensions importantes. Les moteurs pas à pas ont eux l'avantage de pouvoir être commandés sans boucle fermée et permettent le maintien d'une position sans nécessiter d'alimentation. En revanche, la précision angulaire est généralement insuffisante. Une solution consiste à associer un réducteur mécanique au moteur pas à pas. Le réducteur permet de réduire le déplacement angulaire en sortie par rapport au déplacement angulaire du moteur. Ainsi, pour chaque pas du moteur, le déplacement angulaire en sortie représente une fraction de ce pas. Le réducteur peut par exemple prendre la forme d'un dispositif à engrenages. Cependant, afin d'obtenir de faibles rapports de transmission, par exemple de l'ordre du centième, le dispositif doit comprendre un nombre important de roues dentées. Outre les problèmes de complexité et d'encombrement, un tel réducteur introduit du jeu et un couple résistant. Des dispositifs de suppression du jeu existent, mais ils introduisent un couple supplémentaire. Une autre solution de réducteur repose sur l'utilisation d'un bras animé en rotation par le moteur via deux bielles. Le bras est en liaison pivot avec un châssis. Une première bielle est entraînée en rotation par le moteur. La deuxième bielle est reliée à la première bielle par une première liaison pivot et au bras par une deuxième liaison pivot. Lorsque les axes de ces deux liaisons pivot se trouvent dans un même plan avec l'axe de rotation du moteur, les deux bielles définissent un point mort, c'est-à-dire une configuration dans laquelle le mouvement du bras s'inverse. Cette inversion s'accompagne d'une diminution ponctuelle du rapport de transmission entre le déplacement angulaire du bras et celui du rotor. Néanmoins, un tel dispositif ne comporte que deux points morts et n'est pas adapté pour un positionnement angulaire selon trois positions distinctes.

Le brevet US 4 246 628 décrit un mécanisme d'entraînement assimilable à un ensemble de quatre bielles permettant de positionner une lampe rétractable en deux positions. Le brevet FR 2 779 790 décrit un convertisseur d'un mouvement circulaire autour d'un pivot en mouvement alternatif pendulaire autour d'un autre pivot d'un actionneur entre sa position de repos verticale à sa position de travail. Le brevet WO 92/08913 décrit un assemblage de bielles. Pour un dispositif comportant n bielles intermédiaires, une rotation de la première bielle entraîne 2ⁿ⁻¹ rotations de la dernière bielle. Le brevet US 584 519 décrit un mécanisme permettant la conversion d'un mouvement de rotation d'un axe en un mouvement de translation de deux coulisseaux sur un même axe.

Un but de l'invention est notamment de fournir un réducteur mécanique apte à fournir trois positions angulaires distinctes avec un faible rapport de transmission. A cet effet, l'invention a pour objet un dispositif de positionnement angulaire comportant :
▪ une première bielle en liaison pivot avec un châssis du dispositif de positionnement angulaire selon un premier axe,
▪ un dispositif d'actionnement apte à entraîner la première bielle en rotation selon le premier axe,
▪ une deuxième bielle en liaison pivot avec la première bielle selon un deuxième axe,
▪ une troisième bielle en liaison pivot avec le châssis selon un troisième axe,
▪ une quatrième bielle en liaison pivot avec le châssis selon un quatrième axe et en liaison pivot avec la deuxième bielle selon un cinquième axe,
▪ une cinquième bielle en liaison pivot avec la troisième bielle selon un sixième axe, et en liaison pivot avec la deuxième ou la quatrième bielle selon un septième axe,
les premier, deuxième, troisième, quatrième, cinquième, sixième et septième axes étant parallèles les uns aux autres,
le dispositif de positionnement angulaire étant configuré de manière à ce que la troisième bielle puisse prendre trois positions angulaires distinctes pour chacune desquelles deux des bielles en liaison pivot entre elles génèrent un point mort dans le dispositif de positionnement angulaire.

Le dispositif d'actionnement est par exemple un moteur rotatif comprenant un stator solidaire du châssis du dispositif de positionnement, et un rotor solidaire de la première bielle.

Au moins l'une des positions angulaires de la troisième bielle pour laquelle un point mort est généré peut correspondre à une coïncidence du deuxième axe avec le plan contenant le premier et le cinquième axe.

Selon une forme particulière de réalisation, la cinquième bielle est en liaison pivot avec la deuxième bielle. Dans cette forme de réalisation, au moins l'une des positions angulaires de la troisième bielle pour laquelle un point mort est généré peut correspondre à une coïncidence du cinquième axe avec le plan contenant le quatrième et le septième axe.

Selon une autre forme particulière de réalisation, la cinquième bielle est en liaison pivot avec la quatrième bielle. Dans cette forme de réalisation, au moins l'une des positions angulaires de la troisième bielle pour laquelle un point mort est généré peut correspondre à une coïncidence du septième axe avec le plan contenant le quatrième et le sixième axe.

Selon une forme particulière de réalisation, le cinquième et le septième axe des liaisons pivot sont confondus.

L'invention a aussi pour objet un système d'étalonnage d'un instrument optique, comprenant un dispositif de positionnement angulaire tel que décrit précédemment, un élément de l'instrument optique étant apte à être fixé à la troisième bielle.

L'invention a notamment pour avantage qu'elle permet d'obtenir à la fois un faible rapport de transmission autour des positions angulaires d'intérêt, et un rapport de transmission plus important en dehors, ce qui permet d'augmenter la vitesse de passage entre les différentes positions.

L'invention sera mieux comprise et d'autres avantages apparaîtront à la lecture de la description qui va suivre, faite en regard de dessins annexés sur lesquels :
- la figure 1 représente, sous forme d'un schéma cinématique, un premier exemple de dispositif de positionnement angulaire selon un premier mode de réalisation de l'invention ;
- la figure 2 représente un deuxième exemple de dispositif de positionnement angulaire selon le premier mode de réalisation de l'invention ;
- la figure 3 représente le dispositif de positionnement angulaire de la figure 1 dans une configuration correspondant à un premier point mort ;
- la figure 4 représente le dispositif de positionnement angulaire de la figure 1 dans une configuration correspondant à un deuxième point mort ;
- la figure 5 représente le dispositif de positionnement angulaire de la figure 1 dans une autre configuration correspondant au premier point mort ;
- la figure 6 représente le dispositif de positionnement angulaire de la figure 1 dans une configuration correspondant à un troisième point mort ;
- la figure 7 représente un premier exemple de dispositif de positionnement angulaire selon un deuxième mode de réalisation de l'invention ;
- la figure 8 représente un deuxième exemple de dispositif de positionnement angulaire selon le deuxième mode de réalisation ;
- la figure 9 représente un exemple de dispositif de positionnement angulaire selon un troisième mode de réalisation ;
- la figure 10 illustre, sous forme d'un graphique, l'évolution d'une position angulaire d'une bielle de sortie du dispositif de positionnement angulaire de la figure 9 en fonction d'une position angulaire d'une bielle d'entrée de ce dispositif.

De manière générale, le dispositif de positionnement angulaire comprend un ensemble de bielles et un ensemble de liaisons pivot dont les axes sont parallèles entre eux. Une première bielle d'entrée, une deuxième bielle de sortie et une troisième bielle sont en liaison pivot avec un châssis du dispositif. Une quatrième et une cinquième bielle sont chacune reliées par deux liaisons pivot à deux autres bielles du dispositif. La bielle d'entrée est apte à être entraînée en rotation par un moteur. Le dispositif de positionnement angulaire est configuré de manière à ce que la bielle de sortie puisse prendre trois positions angulaires distinctes pour chacune desquelles deux bielles en liaison pivot entre elles génèrent un point mort dans le dispositif.

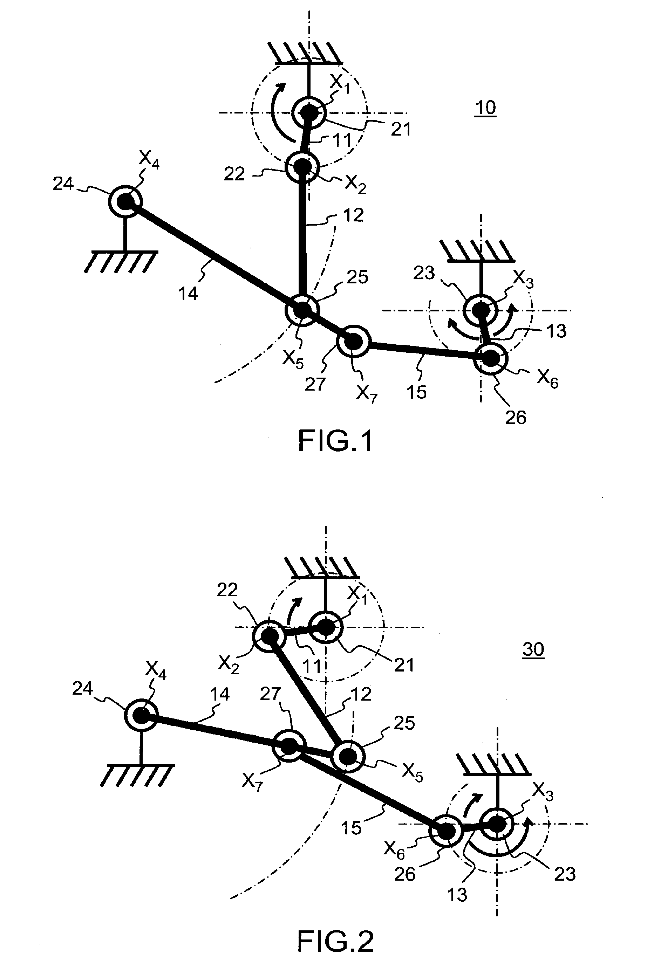

La figure 1 représente, sous forme d'un schéma cinématique, un exemple de dispositif de positionnement angulaire selon un premier mode de réalisation. Le dispositif de positionnement angulaire 10 comprend un ensemble de cinq bielles référencées 11 à 15, et un ensemble de sept liaisons pivot, référencées 21 à 27, et ayant pour axes de rotation, les axes X₁ à X₇, respectivement. La première bielle 11 est en liaison pivot avec un châssis du dispositif 10 selon l'axe X₁. La deuxième bielle 12 est en liaison pivot avec la première bielle 11 selon l'axe X₂, parallèle à l'axe X₁. La troisième bielle 13 est en liaison pivot avec le châssis du dispositif 10 selon l'axe X₃, parallèle aux axes X₁ et X₂. La quatrième bielle 14 est en liaison pivot avec le châssis du dispositif 10 selon l'axe X₄, et en liaison pivot avec la deuxième bielle 12 selon l'axe X₅. Les axes X₄ et X₅ sont parallèles aux axes X₁ à X₃. Enfin, la cinquième bielle 15 est en liaison pivot avec la troisième bielle 13 selon l'axe X₆, et en liaison pivot avec la deuxième bielle 12 selon l'axe X₇. Les axes X₆ et X₇ sont parallèles aux axes X₁ à X₅. Dans le présent exemple de réalisation, les liaisons pivot 24, 25 et 27 sont alignées sur un même axe, la liaison pivot 25 étant située entre les liaisons pivot 24 et 27. Autrement dit, les liaisons pivot 24, 25 et 27 sont disposées sur la bielle 14 de manière à ce que leurs axes X₄, X₅ et X₇ soient contenus dans un même plan, l'axe X₅ étant situé entre les axes X₄ et X₇. Cependant, l'invention peut tout aussi bien fonctionner lorsque les axes X₄, X₅ et X₇ ne sont pas contenus dans un même plan. Le dispositif 10 comprend également un moteur pas à pas, non représenté, apte à entraîner la première bielle 11 en rotation par rapport au châssis autour de l'axe X₁. La première bielle 11 forme ainsi une bielle d'entrée. C'est elle qui imprime le mouvement de rotation imposé en entrée par le moteur pas à pas. La troisième bielle 13 forme une bielle de sortie. Cette bielle doit pouvoir prendre trois positions angulaires distinctes avec un faible déplacement angulaire par rapport au déplacement angulaire de la première bielle 11.

La figure 2 représente, toujours sous forme d'un schéma cinématique, un autre exemple de dispositif de positionnement angulaire 30 selon le premier mode de réalisation. Par rapport à l'exemple de la figure 1, l'axe X₇ de la liaison pivot 27 reliant les bielles 14 et 15 est situé entre les axes X₄ et X₅ des liaisons pivot reliant la bielle 14 au châssis et à la bielle 12, respectivement.

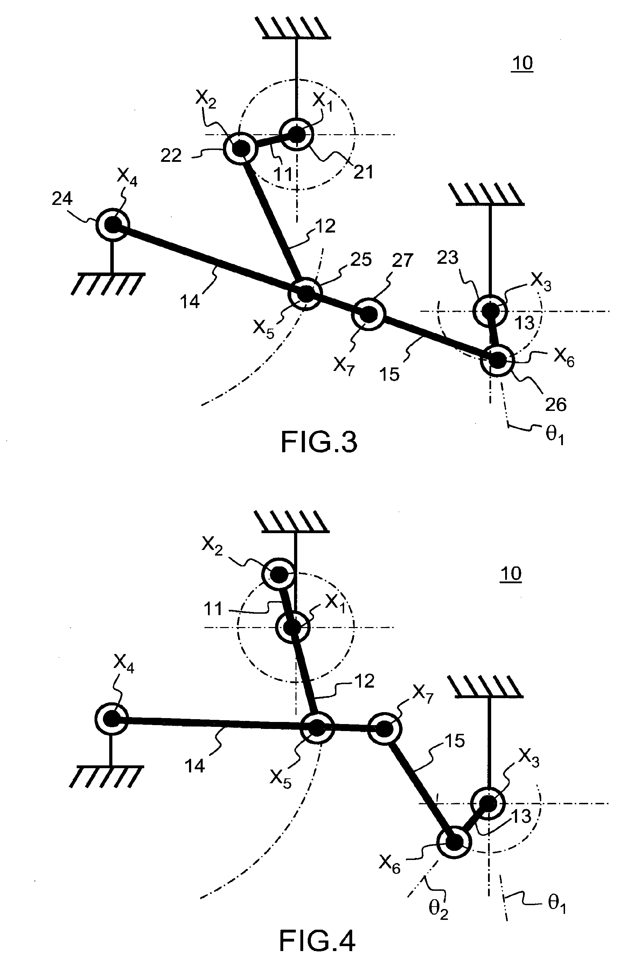

La figure 3 représente le dispositif de positionnement angulaire de la figure 1 dans une première configuration pour laquelle deux bielles en liaison pivot entre elles sont dans une position respective particulière générant un point mort dans le dispositif. Par point mort, on entend une position respective particulière de deux bielles telle que la ou les autres bielles en liaison pivot avec l'une de ces bielles subissent une inversion de mouvement lors du passage par cette position. Le mouvement peut être un mouvement de rotation ou de translation. En l'occurrence, les bielles 14 et 15 sont dans une position respective telle que l'axe X₇ de la liaison pivot 27 reliant ces deux bielles coïncide avec le plan passant par les axes X₄ et X₆. Cette position définit un premier point mort pour la bielle 13. Lors du passage par ce premier point mort, la rotation de la bielle 13 autour de l'axe X₃ change de sens. Elle passe du sens trigonométrique au sens horaire. Ce changement de sens de rotation de la bielle 13 s'effectue pour une position angulaire θ₁ de la bielle 13 avec un déplacement angulaire très faible par rapport au déplacement angulaire correspondant de la bielle 11. Ainsi, lors du passage par le point mort, le rapport de transmission entre le déplacement angulaire de la bielle 13 et le déplacement angulaire de la bielle 11 est très faible. Plus précisément, le rapport de transmission diminue à l'approche du point mort, il s'annule lors du passage du point mort, puis augmente à nouveau progressivement en s'éloignant du point mort.

La figure 4 représente le dispositif de positionnement angulaire de la figure 2 dans une deuxième configuration pour laquelle deux autres bielles sont dans une position respective générant un deuxième point mort pour le dispositif de positionnement angulaire. Entre la première et la deuxième configuration, le moteur pas à pas a entraîné la bielle 11 en rotation dans le sens horaire. Dans cette configuration, les bielles 11 et 12 sont dans une position respective telle que l'axe X₂ de la liaison pivot 22 reliant ces deux bielles coïncide avec le plan passant par les axes X₁ et X₅, l'axe X₁ se trouvant entre les axes X₂ et X₅. Cette position génère un point mort pour la bielle 14. Lors du passage par ce point mort, la rotation de la bielle 14 autour de l'axe X₄ change de sens. Ce changement de sens de rotation entraîne un changement du sens de rotation de la bielle 15 autour de son centre instantané de rotation, qui entraîne à son tour un changement du sens de rotation de la bielle 13 autour de l'axe X₃. La rotation de la bielle 13 passe ainsi du sens horaire au sens trigonométrique pour une deuxième position angulaire θ₂ avec un déplacement angulaire très faible par rapport au déplacement angulaire correspondant de la bielle 11. De façon générale, un point mort généré pour une bielle donnée se propage sur chacune des bielles en aval dans la transmission de mouvement. En l'occurrence, le point mort de la bielle 14 se propage sur la bielle 15 puis sur la bielle 13.

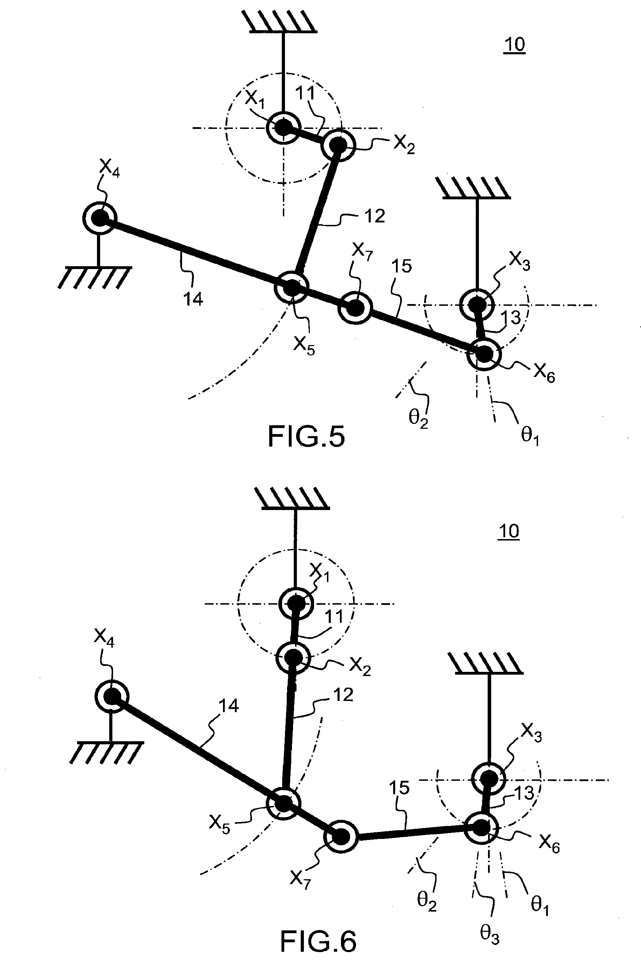

La figure 5 représente le dispositif de positionnement angulaire de la figure 2 dans une troisième configuration pour laquelle les deux bielles 14 et 15 sont à nouveau dans la position générant le premier point mort. Entre la deuxième et la troisième configuration, le moteur pas à pas a entraîné la bielle 11 en rotation dans le sens horaire. Dans cette configuration, les bielles 14 et 15 ont retrouvé la même position respective, c'est-à-dire que l'axe X₇ coïncide avec le plan passant par les axes X₄ et X₆. Le sens de rotation de la bielle 13 autour de l'axe X₃ s'inverse à nouveau pour la position angulaire θ₁. Il passe du sens trigonométrique au sens horaire à la position angulaire θ₁.

La figure 6 représente le dispositif de positionnement angulaire de la figure 2 dans une quatrième configuration pour laquelle les bielles 11 et 12 sont dans une position respective générant un troisième point mort pour le dispositif. Entre le troisième et la quatrième configuration, le moteur pas à pas a de nouveau entraîné la bielle 11 en rotation dans le sens horaire. Dans cette configuration, les bielles 11 et 12 sont dans une position respective telle que l'axe X₂ coïncide avec le plan passant par les axes X₁ et X₅. Cependant, par rapport à la deuxième configuration, l'axe X₂ se trouve entre les axes X₁ et X₅. Lors du passage par ce troisième point mort, la rotation de la bielle 14 autour de l'axe X4 change de sens. Ce changement de sens de rotation entraîne un changement du sens de rotation de la bielle 15 autour de son centre instantané de rotation, qui entraîne à son tour un changement du sens de rotation de la bielle 13 autour de l'axe X₃. La rotation de la bielle passe ainsi du sens horaire au sens trigonométrique pour une troisième position angulaire θ₃ de la bielle 13. Ce changement de sens s'effectue également avec un très faible déplacement angulaire par rapport au déplacement angulaire de la bielle 11.

Le moteur pas à pas peut de nouveau entraîner la bielle 11 en rotation jusqu'à la première configuration représentée à la figure 3, et pour laquelle la bielle 13 prend la position angulaire θ₁. Ainsi, pour un tour de révolution de la bielle 11, la bielle 13 prend successivement les positions angulaires θ₁, θ₂, θ₁, θ₃ et θ₁, soit trois positions angulaires distinctes. Dans la mesure où le débattement angulaire maximale de la bielle 13, à savoir entre les positions angulaires θ₁ et θ₂, ne représente qu'une portion de tour complet, en l'occurrence environ 50 degrés, il apparaît clairement que le rapport de transmission moyen entre le déplacement angulaire de la bielle 13 et celui de la bielle 11 est inférieur à un. Surtout, comme indiqué précédemment, le passage par les trois points morts entraîne localement une importante diminution du rapport de transmission.

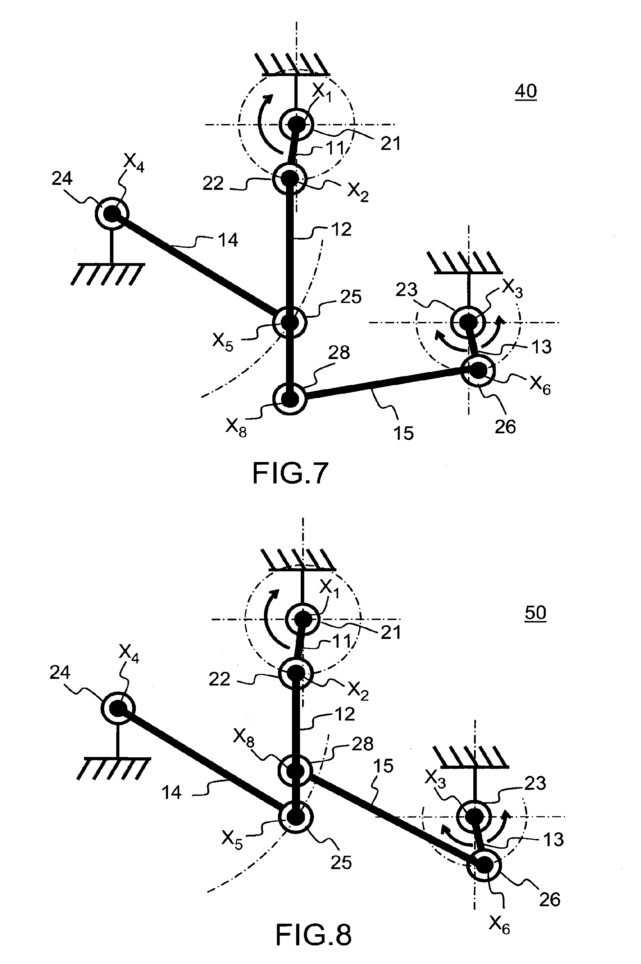

La figure 7 représente, sous forme d'un schéma cinématique, un premier exemple de dispositif de positionnement angulaire selon un deuxième mode de réalisation. Le dispositif 40 selon ce deuxième mode de réalisation se distingue des dispositifs 10 et 30 selon le premier mode de réalisation en ce que la bielle 15 est en liaison pivot avec la bielle 12 au lieu de la bielle 14. Cette liaison est réalisée par une liaison pivot 28 d'axe X₈. L'axe X₈ est parallèle aux axes X₁ à X₆ des liaisons pivot 21 à 26. Dans cet exemple de réalisation, les liaisons pivot 22, 25 et 28 sont disposées sur la bielle 12 de manière à ce que leurs axes X₂, X₅ et X₈ soient contenus dans un même plan, l'axe X₅ étant situé entre les axes X₂ et X₈. L'invention pourrait aussi fonctionner si l'axe X₅ n'était pas contenu dans le plan des axes X₂ et X₈. Dans ce mode de réalisation, un point mort peut être généré pour une position respective particulière des bielles 11 et 12, pour une position respective particulière des bielles 12 et 14, ainsi que pour une position respective particulière des bielles 12 et 15. Ces positions respectives peuvent ou non être obtenues en fonction de la configuration du dispositif, et notamment des distances entre les liaisons pivot.

La figure 8 représente, toujours sous forme d'un schéma cinématique, un deuxième exemple de dispositif de positionnement angulaire 50 selon le deuxième mode de réalisation. Par rapport à l'exemple de la figure 7, l'axe X₈ de la liaison pivot 28 reliant les bielles 12 et 15 est situé entre les axes X₂ et X₅ des liaisons pivot reliant la bielle 12 à la bielle 11 et à la bielle 14, respectivement.

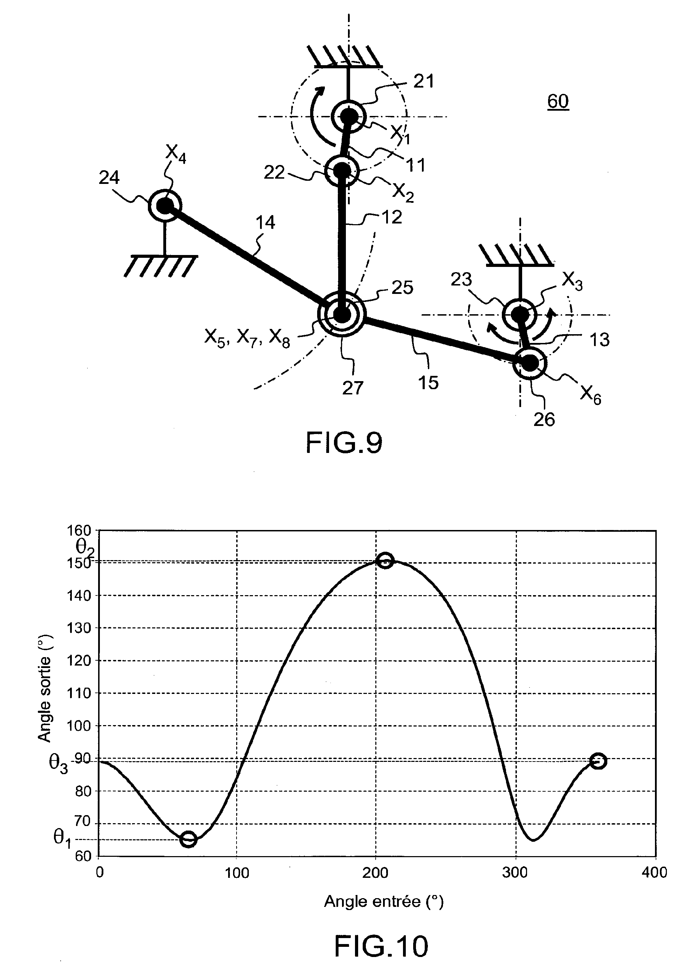

La figure 9 représente, sous forme d'un schéma cinématique, un exemple de dispositif de positionnement angulaire selon un troisième mode de réalisation. Ce dispositif 60 correspond en réalité à une combinaison du premier et du deuxième mode de réalisation. Ainsi, la bielle 15 est en liaison pivot à la fois avec la bielle 12 et avec la bielle 14 selon un même axe. Autrement dit, les axes X₅, X₇ et X₈ sont confondus. Ce mode de réalisation peut présenter un avantage en termes d'encombrement.

La figure 10 illustre, sous forme d'un graphique, l'évolution de la position angulaire de la bielle de sortie 13 en fonction de la position angulaire de la bielle d'entrée 11 pour le dispositif de positionnement angulaire 60 de la figure 9. Chaque position angulaire est repérée par rapport à une position de référence. Les positions de référence correspondent ici à l'une des configurations dans laquelle deux bielles sont dans une position respective générant un point mort. Par analogie avec le dispositif 10 de la figure 1, on considère par exemple que la position de référence de la bielle 13 est la position angulaire θ₃. Avec la rotation de la bielle 11 autour de l'axe X₁ dans le sens horaire, la bielle 13 tourne dans le sens trigonométrique vers la position angulaire θ₁. Lorsque les bielles 14 et 15 génèrent le premier point mort, la bielle 13 est dans la position θ₁ et subit une inversion de son sens de rotation. Si la bielle 11 continue son mouvement de rotation, la bielle 13 tourne ensuite dans le sens horaire jusqu'à la position θ₂. Dans cette position, les bielles 11 et 12 génèrent le deuxième point mort. La bielle 13 subit à nouveau une inversion de son sens de rotation. Si la bielle 11 poursuit encore son mouvement de rotation, la bielle 13 tourne donc dans le sens trigonométrique jusqu'à la position angulaire θ₁. Dans cette position, les bielles 14 et 15 se retrouvent dans la position du troisième point mort. La bielle 13 subit une nouvelle inversion de son sens de rotation. En poursuivant le mouvement de rotation de la bielle 11 jusqu'à la position de référence, la bielle 13 tourne dans le sens horaire jusqu'à la position angulaire θ₃.

Dans les différents exemples de dispositifs de positionnement angulaire, il a été considéré que l'articulation des bielles entre elles ou par rapport au châssis du dispositif était assurée par des liaisons pivot. Bien entendu, ces articulations peuvent être assurées par tout type de liaison comportant un degré de liberté en rotation autour de l'axe considéré. En particulier, chaque liaison pivot pourrait être remplacée par une liaison pivot glissant ayant le même axe de rotation ou par une liaison rotule. Par ailleurs, les exemples de réalisation sont représentés avec des configurations particulières en termes de positionnement des axes de rotation des différentes liaisons pivot entre elles, et donc en termes de longueur des bielles. Bien entendu, l'invention s'applique à d'autres configurations, pour autant qu'elles engendrent chacune au moins trois points morts pour le dispositif.

Le fonctionnement du dispositif de positionnement angulaire selon l'invention a été décrit en considérant que la bielle d'entrée 11 était toujours entraînée dans le même sens de rotation pour orienter la bielle de sortie 13 dans les différentes positions angulaires θ₁, θ₂ et θ₃. Bien entendu, la bielle 11 peut être entraînée dans les deux sens de rotation.

## Revendications

1. Dispositif de positionnement angulaire comportant :
▪ une première bielle (11) en liaison pivot avec un châssis du dispositif de positionnement angulaire (10, 30, 40, 50, 60) selon un premier axe (X₁),
▪ un dispositif d'actionnement apte à entraîner la première bielle (11) en rotation selon le premier axe (X₁),
▪ une deuxième bielle (12) en liaison pivot avec la première bielle (11) selon un deuxième axe (X₂),
▪ une troisième bielle (13) en liaison pivot avec le châssis selon un troisième axe (X₃),
▪ une quatrième bielle (14) en liaison pivot avec le châssis selon un quatrième axe (X₄) et en liaison pivot avec la deuxième bielle (12) selon un cinquième axe (X₅),
▪ une cinquième bielle (15) en liaison pivot avec la troisième bielle (13) selon un sixième axe (X₆), et en liaison pivot avec la deuxième ou la quatrième bielle (12, 14) selon un septième axe (X₇, X₈),
les premier, deuxième, troisième, quatrième, cinquième, sixième et septième axes (X₁-X₈) étant parallèles les uns aux autres,
le dispositif de positionnement angulaire (10, 30, 40, 50, 60) étant configuré de manière à ce que la troisième bielle (13) puisse prendre trois positions angulaires distinctes (θ₁, θ₂, θ₃) pour chacune desquelles deux des bielles en liaison pivot entre elles génèrent un point mort dans le dispositif de positionnement angulaire.

2. Dispositif selon la revendication 1, dans lequel le dispositif d'actionnement est un moteur rotatif comprenant un stator solidaire du châssis du dispositif de positionnement, et un rotor solidaire de la première bielle (11).

3. Dispositif selon l'une des revendications 1 et 2, dans lequel au moins l'une des positions angulaires (θ₂, θ₃) de la troisième bielle (13) correspond à une coïncidence du deuxième axe (X₂) avec le plan contenant le premier (X₁) et le cinquième axe (X₅).

4. Dispositif selon l'une des revendications précédentes, dans lequel la cinquième bielle (15) est en liaison pivot avec la deuxième bielle (12), au moins l'une des positions angulaires de la troisième bielle (13) correspondant à une coïncidence du cinquième axe (X₅) avec le plan contenant le quatrième (X₄) et le septième axe (X₈).

5. Dispositif selon l'une des revendications 1 à 4, dans lequel la cinquième bielle (15) est en liaison pivot avec la quatrième bielle (14), au moins l'une des positions angulaires (θ₁) de la troisième bielle (13) correspondant à une coïncidence du septième axe (X₇) avec le plan contenant le quatrième (X₄) et le sixième axe (X₆).

6. Dispositif selon l'une des revendications précédentes, dans lequel le cinquième (X₅) et le septième axe (X₇, X₈) des liaisons pivot (25, 27, 28) sont confondus.

7. Système d'étalonnage d'un instrument optique, comprenant un dispositif de positionnement angulaire (10, 30, 40, 50, 60) selon l'une des revendications précédentes, un élément de l'instrument optique étant apte à être fixé à la troisième bielle (13).

## Patentansprüche

1. Winkelpositionierungsvomichtung, die Folgendes umfasst:
- eine erste Stange (11) in Schwenkverbindung mit einem Rahmen der Winkelpositionierungsvorrichtung (10, 30, 40, 50, 60) um eine erste Achse (X₁),
- eine Betätigungsvorrichtung, die die erste Stange (11) um die Achse (X₁) in Drehung versetzen kann,
- eine zweite Stange (12) in Schwenkverbindung mit der ersten Stange (11) um eine zweite Achse (X₂),
- eine dritte Stange (13) in Schwenkverbindung mit dem Rahmen um eine dritte Achse (X₃),
- eine vierte Stange (14) in Schwenkverbindung mit dem Rahmen um eine vierte Achse (X₄) und in Schwenkverbindung mit der zweiten Stange (12) um eine fünfte Achse (X₅),
- eine fünfte Stange (15) in Schwenkverbindung mit der dritten Stange (13) um eine sechste Achse (X₆) und in Schwenkverbindung mit der zweiten oder der vierten Stange (12, 14) um eine siebte Achse (X₇, X₈),
wobei die erste, zweite, dritte, vierte, fünfte, sechste und siebte Achse (X₁-X₈) parallel zueinander sind,
wobei die Winkelpositionierungsvoruchtung (10, 30, 40, 50, 60) so konfiguriert ist, dass die dritte Stange (13) drei verschiedene Winkelpositionen (θ₁, θ₂, θ₃) einnehmen kann, für jede von denen zwei der Stangen in Schwenkverbindung miteinander einen Totpunkt in der Winkelpositionierungsvorrichtung erzeugen.

2. Vorrichtung nach Anspruch 1, bei der die Betätigungsvorrichtung ein Drehmotor ist, der einen mit dem Rahmen der Positionierungsvorrichtung fest verbundenen Stator und einen mit der ersten Stange (11) fest verbundenen Rotor umfasst.

3. Vorrichtung nach einem der Ansprüche 1 und 2, bei der wenigstens eine der Winkelpositionen (θ₂, θ₃) der dritten Stange (13) einem Zusammenfallen der zweiten Achse (X₂) mit der Ebene entspricht, die die erste (X₁) und die fünfte Achse (X₅) enthält.

4. Vorrichtung nach einem der vorherigen Ansprüche, bei der die fünfte Stange (15) in Schwenkverbindung mit der zweiten Stange (12) ist, wobei wenigstens eine der Winkelpositionen der dritten Stange (13) einem Zusammenfallen der fünften Achse (X₅) mit der Ebene entspricht, die die vierte (X₄) und die siebte Achse (X₈) enthält.

5. Vorrichtung nach einem der Ansprüche 1 bis 4, bei der die fünfte Stange (15) in Schwenkverbindung mit der vierten Stange (14) ist, wobei wenigstens eine der Winkelpositionen (θ₁) der dritten Stange (13) einem Zusammenfallen der siebten Achse (X₇) mit der Ebene entspricht, die die vierte (X₄) und die sechste Achse (X₆) enthält.

6. Vorrichtung nach einem der vorherigen Ansprüche, bei der die fünfte (X₅) und die siebte Achse (X₇, X₈) der Schwenkverbindungen (25, 27, 28) zusammenfallen.

7. Kalibrierungssystem für ein optisches Instrument, das eine Winkelpositionierungsvorrichtung (10, 30, 40, 50, 60) nach einem der vorherigen Ansprüche umfasst, wobei ein Element des optischen Instruments an der dritten Stange (13) befestigt werden kann.

## Claims

1. Angular positioning device comprising:
▪ a first connecting rod (11) in pivot connection with a frame of the angular positioning device (10, 30, 40, 50, 60), according to a first axis (X₁);
▪ an actuating device which can rotate the first connecting rod (11) according to the first axis (X₁);
▪ a second connecting rod (12) in pivot connection with the first connecting rod (11), according to a second axis (X₂);
▪ a third connecting rod (13) in pivot connection with the frame, according to a third axis (X₃);
▪ a fourth connecting rod (14) in pivot connection with the frame, according to a fourth axis (X₄), and in pivot connection with the second connecting rod (12), according to a fifth axis (X₅);
▪ a fifth connecting rod (15) in pivot connection with the third connecting rod (13), according to a sixth axis (X₆), and in pivot connection with the second or the fourth connecting rod (12, 14), according to a seventh axis (X₇, X₈);
the first, second, third, fourth, fifth, sixth and seventh axes (X₁-X₈) being parallel to one another;
the angular positioning device (10, 30, 40, 50, 60) being configured such that the third connecting rod (13) can adopt three distinct angular positions (θ₁, θ₂, θ₃), for each of which two of the connecting rods in pivot connection with one another generate a dead centre in the angular positioning device.

2. Device according to Claim 1, wherein the actuating device is a rotary motor comprising a stator integral with the frame of the positioning device, and a rotor integral with the first connecting rod (11).

3. Device according to one of claims 1 and 2, wherein at least one of the angular positions (θ₂, θ₃) of the third connecting rod (13) corresponds to coincidence of the second axis (X₂) with the plane containing the first (X₁) and the fifth axes (X₅).

4. Device according to one of the preceding claims, wherein the fifth connecting rod (15) is in pivot connection with the second connecting rod (12), at least one of the angular positions of the third connecting rod (13) corresponding to coincidence of the fifth axis (X₅) with the plane containing the fourth (X₄) and the seventh (X₈) axes.

5. Device according to one of claims 1 to 4, wherein the fifth connecting rod (15) is in pivot connection with the fourth connecting rod (14), at least one of the angular positions (θ₁) of the third connecting rod (13) corresponding to coincidence of the seventh axis (X₇) with the plane containing the fourth (X₄) and the sixth (X₆) axes.

6. Device according to one of the preceding claims, wherein the fifth (X₅) and the seventh axes (X₇, X₈) of the pivot connections (25, 27, 28) are combined.

7. System for calibration of an optical instrument, comprising an angular positioning device (10, 30, 40, 50, 60) according to one of the preceding claims, an element of the optical instrument being able to be secured on the third connecting rod (13).
